## Europäisches Patentamt
## European Patent Office
## Office européen des brevets

(19)

(11) Numéro de publication: **0 034 513**
**B1**

(12)

# FASCICULE DE BREVET EUROPEEN

(45) Date de publication du fascicule du brevet:
**30.05.84**

(21) Numéro de dépôt: **81400113.7**

(22) Date de dépôt: **27.01.81**

(51) Int. Cl.³: **C 04 B 35/48, C 01 G 25/02, C 25 B 1/04, H 01 M 8/12**

(54) **Procédé de fabrication de pièces en électrolyte solide à base de zircone stabilisée et les pièces obtenues par ce procédé.**

(30) Priorité: **08.02.80 FR 8002788**

(43) Date de publication de la demande:
**26.08.81 Bulletin 81/34**

(45) Mention de la délivrance du brevet:
**30.05.84 Bulletin 84/22**

(84) Etats contractants désignés:
**DE FR GB SE**

(56) Documents cités:
**EP - A - 0 004 808**
**FR - A - 1 375 469**
**FR - A - 1 459 437**
**FR - A - 2 125 729**
**JOURNAL OF THE AMERICAN CERAMIC SOCIETY, vol. 60, no. 5/6, 1977, Columbus, Ohio, US K.W. BROWALL et al.: "Synthesis and Evaluation of Doped Y2O3-Stabilized ZrO2 for the production of Hydrogen", pages 262-267**
**JOURNAL OF MATERIALS SCIENCE, vol. 14, 1979, London, GB K.C. RADFORD et al.: "Zirconia electrolyte cells", parts 1 en 2, pages 59-69**
**SPRECHSAAL, vol. 107, no. 13, juillet 1974 Coburg, DE H. TAKAGI et al.: "Effects of Alumina on sintering of Zirconia stabilized with Calcia", pages 584-588**
**COMPTES RENDUS HEBDOMADAIRES DES SEANCES**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Bernard, Hervé, 33, boulevard Foch, F-38100 Grenoble (FR)**
Inventeur: **Vigule, Jean-Claude, La Pra Herbeys, F-38320 Eybens (FR)**

(74) Mandataire: **Mongrédien, André et al, c/o BREVATOME 25, rue de Ponthieu, F-75008 Paris (FR)**

(56) Documents cités: (suite)
**DE L'ACADEMIE DES SCIENCES,vol. 274, no. 12, 1972, série C, Paris, FR P. MOURON et al.: "Sur une nouvelle préparation de la zircone stabilisée sous forme cubique", pages 1173-1176**

**Description**

La présente invention concerne un procédé de préparation de pièces en électrolyte solide à base de zircone stabilisée et les pièces obtenues par ce procédé.

De façon plus précise, elle se rapporte à l'obtention d'un électrolyte solide à base de zircone qui présente une conductivité électrique améliorée par rapport aux électrolytes solides de ce type connus actuellement, ce qui le rend particulièrement intéressant pour une utilisation comme électrolyte solide dans une cellule d'électrolyse de la vapeur d'eau à haute température destinée à la production d'hydrogène gazeux, ou encore comme électrolyte solide d'une pile à combustible.

On sait que, compte tenu de l'importance des besoins en hydrogène dans l'industrie chimique, on a développé récemment des techniques de production d'hydrogène par électrolyse de la vapeur d'eau à haute température dans des cellules comprenant un électrolyte solide généralement constitué par une céramique conductrice des ions oxygène, disposée entre deux électrodes qui jouent respectivement le rôle d'anode et de cathode.

Dans ces cellules, la vapeur d'eau est introduite à une température d'environ 760 à 950°C dans la partie cathodique de la cellule, et elle est réduite en hydrogène gazeux à la surface de l'électrolyte solide quand on applique aux bornes de la cellule une tension de l'ordre de grandeur du volt.

Dans de telles cellules, l'essentiel de la dissipation résistive, se situe au niveau de l'électrolyte solide et il importe en conséquence de limiter sa résistivité pour réduire la tension d'électrolyse aux bornes de la cellule.

Jusqu'à présent, on a utilisé dans de telles cellules des électrolytes à base de zircone comportant de faibles additions d'un oxyde stabilisant tel que l'oxyde de calcium, l'oxyde d'yttrium, l'oxyde de cérium, l'oxyde de scandium ou un oxyde de terres rares.

Pour améliorer la conductivité d'électrolytes de ce type, on a envisagé de leur ajouter des quantités faibles d'un autre oxyde métallique afin d'agir sur certains facteurs tels que la densité, la porosité et la dimension de grains des pièces obtenues, facteurs qui exercent généralement une influence sur la conductivité.

L'emploi d'additifs de ce type est décrit en particulier dans:

— Journal of the American Ceramic Society, vol. 60, n° 516, 197 - pages 262-263; et
— Journal of Materials Science, volume 14, 1979 «Zirconia electrolyte cells», part. 1 - pages 59-64.

Cependant, jusqu'à présent il a été impossible d'obtenir une amélioration sensible de la conductivité d'électrolytes de ce type par addition de quantités faibles d'un autre oxyde.

La présente invention a précisément pour objet un procédé de préparation d'un électrolyte solide à base de zircone stabilisée qui permet d'améliorer la conductivité de cet électrolyte par addition de quantités contrôlées d'oxyde d'aluminium.

Le procédé, selon l'invention, de préparation d'une pièce en électrolyte solide à base de zircone stabilisée, se caractérise en ce qu'il consiste:

a) à préparer une solution alcoolique d'un sel de zirconium, d'un sel d'un métal stabilisateur de la zircone et d'un sel d'aluminium,

b) à former à partir de ladite solution un coprécipité d'hydroxyde de zirconium, d'hydroxyde dudit métal et d'hydroxyde d'aluminium,

c) à séparer le précipité ainsi obtenu,

d) à laver ledit précipité au moyen d'un solvant hydrophile pour éliminer la majeure partie de l'eau,

e) à sécher le précipité ainsi lavé à une température inférieure à 100°C pour éliminer le reste de l'eau,

f) à le calciner sous air,

g) à former à partir de la poudre obtenue par calcination dudit précipité, une ébauche de ladite pièce par compression de ladite poudre, et

h) à fritter l'ébauche ainsi obtenue en atmosphère d'hydrogène.

Le procédé tel que caractérisé ci-dessus, présente ainsi l'avantage de conduire à l'obtention d'un électrolyte solide dont la densité et la conductivité sont améliorées grâce à l'addition de faibles quantités d'alumine au stade de préparation de la poudre d'électrolyte. En effet, on suppose que le mode de préparation de la poudre par coprécipitation des différents hydroxydes et le fait de soumettre le précipité obtenu à un lavage par un solvant hydrophile et à un séchage à une température inférieure à 100°C permet d'obtenir ensuite par compression et frittage une pièce dans laquelle l'alumine est répartie dans les grains plutôt qu'aux joints de grains, avec des dimensions de grains supérieures, ce qui améliore la conductivité de la pièce obtenue.

Selon l'invention, les teneurs en sel de zirconium, en sel dudit métal stabilisateur et en sel d'aluminium de la solution de départ sont choisies pour obtenir la meilleure résistivité.

De préférence, la teneur en sel de zirconium est telle que les proportions relatives entre le zirconium, le métal stabilisateur et l'aluminium présents en solution, correspondent à une composition d'électrolyte comprenant 90 à 91% en moles de zircone, le reste étant constitué par l'oxyde d'yttrium et l'alumine.

Avantageusement, ces teneurs sont telles que les proportions relatives entre le zirconium, le métal stabilisateur et l'aluminium en solution correspondent à une composition d'électrolyte solide comportant 90 à 91% en moles d'oxyde de zirconium, 7 à 10% en moles d'oxyde du métal stabilsateur et une quantité d'alumine supérieure à 0 et allant jusqu'à 2% en moles.

Selon l'invention, le métal stabilisateur est un métal dont l'oxyde permet de stabiliser la zircone. A titre d'exemple, ce métal peut être de l'yttrium, du scandium, du calcium, du cérium ou un métal de la série des terres rares. De préférence, on utilise l'yttrium.

Avantageusement, lorsque la solution comprend un sel de zirconium, un sel d'yttrium et un sel d'aluminium, les proportions relatives entre le zirconium, l'yttrium et l'aluminium présents dans la solution sont telles qu'elles correspondent à une composition d'électrolyte solide comportant 90 à 91% de $ZrO_2$, 8 à 9% d'oxyde d'yttrium et 1% d'alumine, ces pourcentages étant exprimés également en moles.

En effet, les meilleurs résultats sont obtenus lorsque la teneur en alumine de l'électrolyte solide est de 1%; cependant, on obtient également de bons résultats lorsque la teneur en alumine de l'électrolyte est comprise entre 0,5% et 1%.

Selon l'invention, la solution est formée par dissolution des sels dans un alcool tel que l'alcool éthylique.

Lorsque l'on veut réaliser une pièce en électrolyte solide comportant de l'oxyde de zirconium, de l'oxyde d'yttrium et de l'oxyde d'aluminium, les sels utilisés pour la préparation de cette solution sont avantageusement un alcoolate de zirconium tel que du butylate de zirconium, du nitrate d'yttrium et de l'acétyl acétonate d'aluminium. Après avoir préparé la solution alcoolique de sel de zirconium, de sel du métal stabilisateur et de sel d'aluminium, on forme à partir de cette solution un coprécipité d'hydroxyde de zirconium, d'hydroxyde du métal stabilisateur tel que l'yttrium et d'hydroxyde d'aluminium, par hydrolyse au moyen d'ammoniaque, en soumettant la solution à une agitation.

Après précipitation, on sépare le coprécipité obtenu par des techniques classiques, par exemple par filtration, puis on lave ce précipité au moyen d'un solvant hydrophile tel que l'alcool isopropylique, pour éliminer la majeure partie de l'eau présente dans le coprécipité.

Après cette opération, on sèche le précipité à une température inférieure à 100°C pour éliminer les dernières traces d'eau et on le calcine sous air pour obtenir une poudre d'oxydes de zirconium, d'yttrium et d'aluminium.

De préférence, l'étape de séchage du précipité est réalisée en dispersant le précipité lavé par le solvant hydrophile dans un liquide capable de former un azéotrope avec l'eau à une température inférieure à 100°C, et en chauffant le liquide dans lequel est disposé le précipité de façon à extraire l'eau par distillation sous forme d'azéotrope.

A titre d'exemple de liquide susceptible d'être utilisé, on peut citer le benzène.

Toutefois, l'étape de séchage peut être réalisée par évaporation sous vide ou encore par lyophilisation.

On peut aussi réaliser le séchage final en utilisant un solvant hydrophile, par exemple en poursuivant le lavage au moyen du solvant hydrophile pendant une durée suffisante pour éliminer les dernières traces d'eau.

L'étape de calcination est avantageusement réalisée à une température de 700 à 800°C pendant une durée de 3 à 4 heures, lorsque la poudre est constituée de $ZrO_2$, $Y_2O_3$ et $Al_2O_3$. En effet, dans ces conditions, on obtient par calcination une poudre suffisamment réactive, ce qui permet de réaliser le frittage à des températures peu élevées.

Cette poudre est ensuite mise en forme par compression avantageusement sous une pression de 1,5 à 2 t/cm². Eventuellement, avant compression, on ajoute à la poudre un liant organique tel que du méthacrylate de méthyle.

Après compression, l'ébauche obtenue est frittée dans une atmosphère d'hydrogène humide.

La durée et la température de frittage sont choisies en fonction de la réactivité de la poudre obtenue par calcination, de façon à obtenir une pièce présentant une densité élevée et une porosité faible. Dans le cas d'un électrolyte solide constitué d'oxydes de zirconium, d'yttrium et d'aluminium, on réalise avantageusement le frittage à une température d'environ 1300°C, pendant une durée d'environ 6 heures lorsque la calcination a été effectuée dans les conditions précitées.

Selon une variante de mise en œuvre du procédé de l'invention, qui est adaptée à la réalisation d'une pièce en électrolyte solide comportant sur sa surface un réseau de particules conductrices, on répartit à la surface de l'ébauche une poudre de métal, par exemple une poudre de nickel, de façon à obtenir, par cofrittage de la poudre de métal et de la poudre d'oxydes, un ensemble cathode-électrolyte utilisable notamment dans une cellule d'électrolyse de la vapeur d'eau à haute température.

Dans ce cas, on répartit sur l'une des surfaces de l'ébauche avant ou après compression de la poudre, une quantité de particules de métal, qui, après frittage de l'ensemble, constitue soit un réseau cathodique conducteur, soit des points de fixation pour un dépôt conducteur mince déposé ensuite sur la pièce selon un tracé déterminé par des techniques classiques.

On précise que selon le procédé de l'invention, les pièces peuvent être réalisées sour la forme de cylindres ayant, par exemple, 20 mm de diamètre et 5 mm d'épaisseur et une densité qui correspond à 98% de la densité théorique. On peut également réaliser par le procédé de l'invention des objets de forme tubulaire, ou encore des objets plans de plus grandes dimensions, par exemple, des disques de 90 mm de diamètre et de 0,6 mm d'épaisseur ayant une densité correspondant à 98% de la densité théorique.

De telles pièces peuvent constituer la partie électrochimiquement active du coeur d'un électrolyseur de la vapeur d'eau à 800/900°C.

D'autres caractéristiques et avantages du procédé de l'invention apparaîtront mieux à la lecture de la description qui suit d'un exemple de mise en œuvre du procédé de l'invention, donné à titre illustratif et non limitatif se référant au dessin annexé sur lequel:

la figure 1 est un diagramme qui illustre d'une part, les variations de la densité de l'électrolyte en fonction de sa teneur en alumine (courbe 1) et, d'autre part, les variations de la résistivité de l'électrolyte en fonction de sa teneur en alumine (courbe 2);

la figure 2 est une micrographie qui illustre la microstructure d'un électrolyte solide contenant 0,5% d'alumine; et

la figure 3 est une micrographie qui illustre la microstructure d'une électrolyte solide ne comportant pas d'alumine.

Cet exemple se rapporte à la préparation d'une pièce en électrolyte solide constitué de zircone, d'oxyde d'yttrium et d'alumine.

Tout d'abord, on prépare une solution dans l'alcool éthylique, de butylate de zirconium et de nitrate d'yttrium de façon à obtenir une proportion relative d'yttrium et de zirconium correspondant à la composition (en moles) : 91% de $ZrO_2$ et 8% de $Y_2O_3$. A cette solution on ajoute de l'acétyl acétonate d'aluminium dans la proportion qui correspond à la composition finale (en moles):
— 91% de ZrO$_2$,
— 8% de Y$_2$O$_3$, et
— 1% de Al$_2$O$_3$.

On forme à partir de cette solution un coprécipité d'hydxroxydes de zirconium, d'yttrium et d'aluminium au moyen d'ammoniaque, en soumettant la solution à une agitation. Après formation du précipité, on sépare ce dernier de la solution par filtration, puis on le lave à l'alcool isopropylique pour éliminer la majeure partie de l'eau.

Après lavage, on introduit le précipité dans un appareil de distillation contenant du benzène en quantité telle qu'elle correspond à un excès de benzène par rapport à l'azéotrope alcool isopropylique-benzène-eau, puis on chauffe le précipité dispersé dans le benzène pour extraire l'eau et l'alcool isopropylique présents dans le précipité par distillation sous forme d'azéotrope. On arrête la distillation lorsque l'on se trouve en présence de benzène pur. On sépare alors le précipité du benzène par filtration, puis on le sèche à l'air et on le calcine sous air à 750°C pendant 3 heures. On ajoute ensuite à la poudre ainsi obtenue un liant organique constitué par du méthacrylate de méthyle en quantité telle qu'il représente de l'ordre du % en poids du mélange de poudre et de liant.

On réalise ensuite à partir de ce mélange une ébauche de la pièce à obtenir en comprimant ce mélange dans une presse à double effet, sous une pression de 147-196 MPa (1,5 à 2 t/cm$^2$), puis on réalise le frittage de l'ébauche comprimée ainsi obtenue en atmosphère d'hydrogène humide, c'est-à-dire d'hydrogène non séché, à 1300°C pendant 6 heures.

Après frittage, la pièce obtenue comprend 91% de ZrO$_2$, 8% de Y$_2$O$_3$ et 1% de Al$_2$O$_3$, les % étant exprimés en moles.

On mesure la résistivité de la pièce obtenue par la méthode des impédances complexes, en courant alternatif, à une température de 850°C et on trouve ainsi que cette pièce à une résistivité de 15,5 ohms.cm.

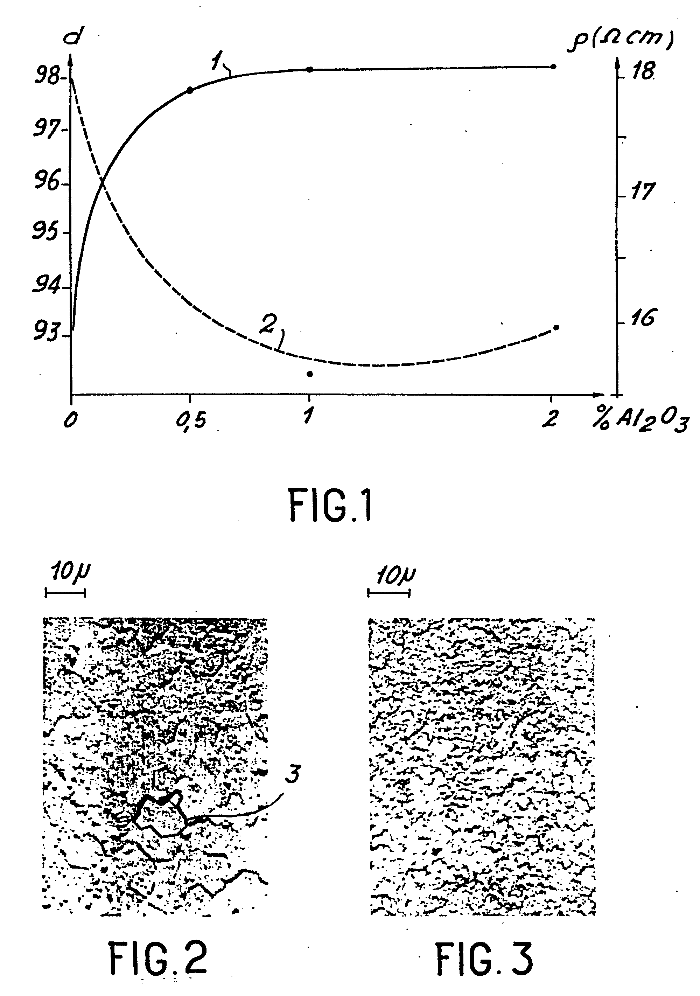

On réalise de la même façon différentes pièces en électrolyte solide qui se différencient uniquement par leur teneur en alumine et en oxyde d'yttrium, la teneur en oxyde d'yttrium variant de 7 à 9% en moles, tandis que la teneur en alumine varie de 0 à 2% en moles, puis on détermine la densité et le résistivité des pièces obtenues. Les résultats de ces mesures sont donnés sur la figure 1 sur laquelle la courbe 1 illustre les variations de la densité $\underline{d}$ de la pièce (exprimé en % de la densité théorique) en fonction de la teneur en alumine (% en moles) des pièces, et la courbe 2 illustre les variations de la résistivité (ohm.cm) en fonction de la teneur en alumine de l'électrolyte solide.

Au vu de cette figure, on constate que pour un électrolyte solide ne contenant pas d'alumine, la résistivité est de 18 ohms.cm et que l'addition de 1% d'alumine permet d'abaisser la résistivité à une valeur de 15,5 ohms.cm, ce qui représente une diminution de l'ordre de 15%. Par ailleurs, on constate que l'addition de quantités d'alumine supérieures à 1% en moles n'améliore pas le résultat obtenu.

En ce qui concerne la densité, on constate que l'addition d'alumine permet également d'améliorer la densité des pièces obtenues. Ainsi, avec 1% d'alumine, on obtient une densité représentant 98% de la densité théorique alors que pour un électrolyte sans alumine, la densité est seulement de 93% de la densité théorique.

Par ailleurs, on précise qu'en effectuant les mesures de résistivité à une température de 400°C, le gain de conductivité global mesuré en courant alternatif par spectroscopie d'impédances complexes est de 50% pour une pièce ayant la composition 91% ZrO$_2$, 8% Y$_2$O$_3$ et 1% Al$_2$O$_3$.

En se reportant aux figures 2 et 3 qui illustrent respectivement la microstructure de deux pièces obtenues par le procédé de l'invention ayant les compositions suivantes:
figure 2: 91% ZrO$_2$, 8,5% Y$_2$O$_3$ et 0,5% Al$_2$O$_3$,
figure 3: 91% ZrO$_2$, 9% Y$_2$O$_3$,
on constate que l'addition d'alumine permet d'accroître la dimension des grains tels que 3. Par ailleurs, on voit que l'alumine n'est pas répartie aux joints de grains.

**Revendications**

1. Procédé de préparation d'une pièce en électrolyte solide à base de zircone stabilisée, caractérisé en ce qu'il consiste:
   a) à préparer une solution alcoolique d'un sel de zirconium, d'un sel d'un métal stabilisateur de la zircone et d'un sel d'aluminium,
   b) à former à partir de ladite solution un coprécipité d'hydroxyde de zirconium, d'hydroxyde dudit métal et d'hydroxyde d'aluminium,
   c) à séparer le précipité ainsi obtenu,
   d) à laver ledit précipité au moyen d'un solvant hydrophile pour éliminer la majeure partie de l'eau,
   e) à sécher le précipité ainsi lavé à une température inférieure à 100°C pour éliminer le reste de l'eau,
   f) à le calciner sous air,
   g) à former à partir de la poudre obtenue par calcination dudit précipité, une ébauche de ladite pièce par compression de ladite poudre, et
   h) à fritter l'ébauche ainsi obtenue en atmosphère d'hydrogène.

2. Procédé selon la revendication 1, caractérisé en ce que les teneurs en sel de zirconium, en sel dudit métal et en sel d'aluminium de ladite solution sont telles que les proportions relatives entre le zirconium, ledit métal stabilisateur et l'aluminium présents dans la solution, correspondent à une composition d'électrolyte solide comportant 90 à 91% en moles d'oxyde de zirconium, de 7 à 10% en moles d'oxyde dudit métal et une quantité d'alumine supérieure à 0 et allant jusqu'à 2% en moles.

3. Procédé selon l'une quelconque des revendications 1 et 2, caractérisé en ce que ledit métal stabilisateur est l'yttrium.

4. Procédé selon la revendication 3, caractérisé en ce que les teneurs en sel de zirconium, en sel d'yttrium et en sel d'aluminium de ladite solution sont telles que les proportions relatives entre le zirconium, l'yttrium et l'aluminium présents dans ladite solution correspondent à une composition d'électrolyte solide comportant 90 à 91 % en moles de ZrO$_2$, 8 à 9 % en moles d'oxyde d'yttrium et 1 % en moles d'alumine.

5. Procédé selon l'une quelconque des revendications 1 à 4, caractérisé en ce que ladite solution est formée par dissolution desdits sels dans de l'alcool éthylique.

6. Procédé selon l'une quelconque des revendications 3 à 5, caractérisé en ce que le sel de zirconium est un alcoolate de zirconium, le sel d'yttrium est du nitrate d'yttrium et le sel d'aluminium est de l'acétyl acétonate d'aluminium.

7. Procédé selon l'une quelconque des revendications 1 à 6, caractérisé en ce qu'on forme ledit précipité au moyen d'ammoniaque en soumettant la solution à une agitation.

8. Procédé selon l'une quelconque des revendications 1 à 7, caractérisé en ce que le solvant hydrophile est l'alcool isopropylique.

9. Procédé selon l'une quelconque des revendications 1 à 8, caractérisé en ce que l'on réalise l'étape de séchage du précipité en dispersant le précipité dans un liquide capable de former un azéotrope avec l'eau à une température inférieure à 100°C et en chauffant le liquide dans lequel est dispersé ledit précipité pour extraire l'eau sous forme d'azéotrope par distillation.

10. Procédé selon la revendication 9, caractérisé en ce que ledit liquide est le benzène.

11. Procédé selon l'une quelconque des revendications 3 à 10, caractérisé en ce qu'on calcine ledit précipité sous air à une température comprise entre 700 et 800°C pendant une durée comprise entre 3 et 4 heures et en ce qu'on réalise le frittage à une température d'environ 1300°C pendant une durée d'environ 6 heures.

12. Procédé selon l'une quelconque des revendications 1 à 11, caractérisé en ce qu'on mélange la poudre obtenue par calcination dudit précipité avec un liant organique et en ce que l'on forme ladite ébauche par compression du mélange de poudre et de liant.

13. Procédé selon la revendication 12, caractérisé en ce que le liant est le méthacrylate de méthyle.

14. Procédé selon l'une quelconque des revendications 3 à 13, caractérisé en ce que l'on comprime ladite poudre sous une pression de 147-196 MPa (1,5 à 2 t/cm$^2$).

15. Procédé selon l'une quelconque des revendications 1 à 14, caractérisé en ce qu'on disperse sur la surface de l'ébauche une poudre de métal conducteur de façon à obtenir par cofrittage desdites poudres un ensemble cathode-électrolyte solide.

**Patentansprüche**

1. Verfahren zur Herstellung eines Körpers aus einem festen Elektrolyten auf Basis von stabilisiertem Zirkoniumoxid, dadurch gekennzeichnet, dass man
a) eine alkoholische Lösung eines Zirkoniumsalzes, eines Salzes eines Stabilisierungsmetalls für das Zirkoniumoxid und eines Aluminiumsalzes herstellt,
b) aus dieser Lösung ein Copräzipitat aus Zirkoniumhydroxid, dem Hydroxid des Stabilisatormetalls und Aluminiumhydroxid ausfällt,
c) den dabei erhaltenen Niederschlag abtrennt,
d) den Niederschlag mittels eines hydrophilen Lösungsmittels wäscht, um den grösseren Anteil des Wassers zu entfernen,
e) den so gewaschenen Niederschlag bei einer Temperatur unterhalb 100°C trocknet, um den Rest des Wassers zu eliminieren,
f) ihn an der Luft calciniert,
g) aus dem durch Calcinieren des Niederschlags erhaltenen Pulver durch Pressen des Pulvers einen Rohling des Körpers herstellt und
h) den dabei erhaltenen Rohling in einer Wasserstoffatmosphäre sintert.

2. Verfahren nach Anspruch 1, dadurch gekennzeichnet, dass die Gehalte an Zirkoniumsalz, an dem Stabilisatormetallsalz und an Aluminiumsalz der Lösung so sind, dass die relativen Mengenanteile an Zirkonium, dem Stabilisatormetall und Aluminium, die in der Lösung vorliegen, einer Zusammensetzung des festen Elektrolyten entsprechen, die umfasst 90 bis 91 Mol-% Zirkoniumoxid, 7 bis 10 Mol-% Stabilisatormetalloxid und mehr als 0 bis 2 Mol-% Aluminiumoxid.

3. Verfahren nach einem der Ansprüche 1 und 2, dadurch gekennzeichnet, dass das Stabilisatormetall Yttrium ist.

4. Verfahren nach Anspruch 3, dadurch gekennzeichnet, dass die Gehalte der Lösung an Zirkoniumsalz, Yttriumsalz und Aluminiumsalz so sind, dass die relativen Mengenanteile an Zirkonium, Yttrium und Aluminium, die in der Lösung vorliegen, einer Zusammensetzung des festen Elektrolyten entsprechen, die umfasst 90 bis 91 Mol-% ZrO$_2$, 8 bis 9 Mol-% Yttriumoxid und 1 Mol-% Aluminiumoxid.

5. Verfahren nach einem der Ansprüche 1 bis 4, dadurch gekennzeichnet, dass die Lösung durch Auflösen der Salze in Ethylalkohol hergestellt wird.

6. Verfahren nach einem der Ansprüche 3 bis 5, dadurch gekennzeichnet, dass das Zirkoniumsalz ein Zirkoniumalkoholat ist, dass das Yttriumsalz Yttriumnitrat ist und dass das Aluminiumsalz Aluminiumacetylacetonat ist.

7. Verfahren nach einem der Ansprüche 1 bis 6, dadurch gekennzeichnet, dass man den Niederschlag mit Ammoniak erzeugt, wobei man die Lösung rührt.

8. Verfahren nach einem der Ansprüche 1 bis 7, dadurch gekennzeichnet, dass das hydrophile Lösungsmittel Isopropylalkohol ist.

9. Verfahren nach einem der Ansprüche 1 bis 8, dadurch gekennzeichnet, dass man die Trocknung des Niederschlags durchführt, indem man den Niederschlag in einer Flüssigkeit dispergiert, die mit Wasser bei einer Temperatur unterhalb 100°C ein Azeotrop bilden kann, und indem man die Flüssigkeit, in welcher der Niederschlag dispergiert ist, erwärmt, um das Wasser in Form des Azeotrops durch Destillation zu entfernen.

10. Verfahren nach Anspruch 9, dadurch gekennzeichnet, dass die Flüssigkeit Benzol ist.

11. Verfahren nach einem der Ansprüche 3 bis 10, dadurch gekennzeichnet, dass man den Niederschlag an der Luft bei einer Temperatur zwischen 700 und 800°C für einen Zeitraum zwischen 3 und 4 Stunden calciniert und dass man das Sintern bei einer Temperatur von etwa 1300°C für einen Zeitraum von etwa 6 Stunden durchführt.

12. Verfahren nach einem der Ansprüche 1 bis 11, dadurch gekennzeichnet, dass man das durch Calcinieren des Niederschlags erhaltene Pulver mit einem organischen Bindemittel mischt und dass man den Rohling durch Pressen der Mischung aus dem Pulver und dem Bindemittel herstellt.

13. Verfahren nach Anspruch 12, dadurch gekennzeichnet, dass das Bindemittel Methylmethacrylat ist.

14. Verfahren nach einem der Ansprüche 3 bis 13, dadurch gekennzeichnet, dass man das Pulver unter einem Druck von 147 bis 196 MPa (1,5 bis 2 t/cm$^2$) presst.

15. Verfahren nach einem der Ansprüche 1 bis 14, dadurch gekennzeichnet, dass man auf der Oberfläche des Rohlings ein Pulver aus einem elektrisch leitenden Metall so verteilt, dass man beim gemeinsamen Sintern dieser Pulver ein Kathoden-Festelektrolyt-Aggregat erhält.

## Claims

1. Process for the preparation of a solid electrolyte body based on stabilized zirconia, characterized in that it comprises:
   a) preparing an alcoholic solution of a zirconium salt, a salt of a stabilizing metal for zirconia, and an aluminium salt;
   b) forming from said solution a coprecipitate of zirconium hydroxide, the hydroxide of said metal, and aluminium hydroxide;
   c) separating the thus-obtained precipitate;
   d) washing said precipitate with a hydrophillic solvent to remove the major proportion of the water;
   e) drying the washed precipitate at a temperature below 100°C to remove the rest of the water;
   f) calcining it in air;
   g) forming from the powder obtained by calcining the precipitate, a green blank of said body by compression of said powder; and
   h) sintering the thus-obtained blank in an atmosphere of hydrogen.

2. Process according to claim 1, characterized in that the amounts of zirconium salt, of the salt of the said metal, and of aluminium salt in the said solution are such that the relative amounts of zirconium, stabilizing metal, and aluminium present in the solution correspond to a solid electrolyte composition comprising 90 to 91 mole % of zirconium oxide, 7 to 10 mole % of the oxide of the said metal, and a quantity of alumina greater than 0 and up to 2 mole %.

3. Process according to either of claims 1 and 2, characterized in that the said stabilizing metal is yttrium.

4. Process according to claim 3, characterized in that the amounts of zirconium salt, yttrium salt and aluminium salt in said solution are such that the relative proportions of zirconium, yttrium and aluminium in said solution correspond to a solid electrolyte composition comprising 90 to 91 mole % of $ZnO_2$, 8 to 9 mole % of yttrium oxide and 1 mole % of alumina.

5. Process according to any one of claims 1 to 4, characterized in that the said solution is formed by dissolving said salts in ethyl alcohol.

6. Process according to any one of claims 3 to 5, characterized in that the zirconium salt is an alcoholate of zirconium, the yttrium salt is yttrium nitrate, and the aluminium salt is aluminium acetyl acetonate.

7. Process according to any one of claims 1 to 6, characterized in that said precipitate is formed by agitating said solution in the presence of ammonia.

8. Process according to any one of claims 1 to 7, characterized in that the hydrophilic solvent is isopropyl alcohol.

9. Process according to any one of claims 1 to 8, characterized in that the step of drying the precipitate is carried out by dispersing the precipitate in a liquid capable of forming an azeotrope with water at a temperature below 100°C, and heating the liquid in which the precipitate is dispersed to extract the water by distillation in the form of an azeotrope.

10. Process according to claim 9, characterized in that the said liquid is benzene.

11. Process according to any one of claims 3 to 10, characterized in that said precipitate is calcined in air at a temperature between 700 and 800°C for a period of between 3 and 4 hours, and in that the sintering is carried out at a temperature of around 1300°C for a period of around 6 hours.

12. Process according to any one of claims 1 to 11, characterized in that the powder obtained by calcining said precipitate is mixed with an organic binder, and in that said blank is formed by compressing the mixture of powder and binder.

13. Process according to claim 12, characterized in that the binder is methyl methacrylate.

14. Process according to any one of claims 3 to 13, characterized in that said powder is compressed at a pressure of 147-196 MPa (1.5 to 2 t/cm$^2$).

15. Process according to any one of claims 1 to 14, characterized in that a powder of a conductive metal is distributed over the surface of the blank, whereby to obtain, by co-sintering of the said powders, a cathode-solid electrolyte assembly.

FIG.1

FIG.2

FIG.3